# EUROPEAN PATENT SPECIFICATION

(11) **EP 4 091 477 B1**
(45) Date of publication and mention of the grant of the patent: **16.07.2025**
(21) Application number: 21741510.8
(22) Date of filing: 18.01.2021
(51) Int. Cl.: A24F 40/46, A24F 40/20, H05B 3/26

(54) **AEROSOL GENERATION DEVICE**
AEROSOLERZEUGUNGSVORRICHTUNG
DISPOSITIF DE GÉNÉRATION D'AÉROSOL

(30) Priority: 18.01.2020 CN 202010056188
(43) Date of publication of application: 23.11.2022
(73) Proprietor: Shenzhen First Union Technology Co., Ltd., Shenzhen, Guangdong 518000 (CN)
(72) Inventor: HU, Ruilong, Shenzhen, Guangdong 518000 (CN); CHEN, Wei, Shenzhen, Guangdong 518000 (CN); DAI, Chenpan, Shenzhen, Guangdong 518000 (CN); XU, Zhongli, Shenzhen, Guangdong 518000 (CN); LI, Yonghai, Shenzhen, Guangdong 518000 (CN)
(74) Representative: Proi World Intellectual Property GmbH
(86) International application number: PCT/CN2021/072535
(87) International publication number: WO 2021/143909

(56) References cited:
- CN-A- 103 815 547
- CN-A- 104 522 892
- CN-A- 106 418 701
- CN-A- 107 637 862
- CN-A- 108 095 203
- CN-A- 108 378 426
- CN-A- 109 077 358
- CN-A- 109 674 093
- CN-U- 204 335 822
- CN-U- 209 120 496
- US-A1- 2008 257 367
- US-B2- 9 999 250

## Description

### CROSS REFERENCE TO RELATED APPLICATION(S)

This application claims priority to Chinese Patent Application No. 2020100561887, entitled "Aerosol generation device" and submitted to China National Intellectual Property Administration on January 18th, 2020.

### TECHNICAL FIELD

The present disclosure relates to the technical field of aerosol generation, and in particular to an aerosol generation device.

### BACKGROUND

Heating nonburning tobacco device generally transmits the flavor of the tobacco to consumers through a "heating not burning" method. The appearance and consumption mode are similar to traditional cigarettes too, and thus to certain extent can adapt to and meet the physiological needs and psychological needs of consumers. Such a "heating not burning" method enables the tobacco to be heated only at a low temperature (generally lower than 500°C); compared with the traditional method of the cigarette tobacco being burned to release smoke, when a heating nonburning tobacco device is employed for smoking, the tobacco is heated at a temperature that is much lower than the temperature of burning the traditional cigarette tobacco, thus greatly reducing the generation of harmful substances in the smoke, preventing the generation of tar and a large number of harmful compounds due to the high-temperature burning of the tobacco; in addition, since there is no side-stream smoke, no second hand smoke will be generated to impact the public environment.

Existing heating nonburning tobacco devices generally include a resistor heating element, which is inserted into the heating nonburning tobacco or sleeved on the outer circumferential surface of the heating nonburning tobacco during usage; during working, the heating circuit on the resistor heating element is electrified to generate heat so as to heat rather than burn the heating nonburning tobacco, so that the heating nonburning tobacco forms an aerosol. However, existing heating nonburning tobacco devices, when heating the heating nonburning tobacco, either heat the heating nonburning tobacco gradually from inside to outside through the resistor heating element, or heat the heating nonburning tobacco gradually from outside to inside through the resistor heating element, thus the speed of aerosol formation is slow.
CN 204335822 U relates to a heating combustion-free type electronic cigarette atomizer and an electronic cigarette.

### SUMMARY

In order to solve the problems in existing technologies, the present disclosure provides an aerosol generation device which can increase the speed of aerosol formation. Specifically the present invention provides an aerosol generation device according to independent claim 1 while various improvements to the device are defined in the dependent claims.

In a first aspect, the present disclosure provides an aerosol generation device, including a heating element, wherein the heating element includes a base body, an infrared radiation layer, and at least one light convergence mechanism; the base body has a chamber for accommodating an aerosol substrate material; the infrared radiation layer is disposed on a surface of the base body, and is configured to generate infrared radiation to heat the aerosol substrate material disposed in the chamber; the at least one light convergence mechanism is bonded onto the base body and is configured to converge the infrared radiation into the chamber to heat at least a portion of the aerosol substrate material.

Preferably, the light convergence mechanism includes a light convergent lens located between the infrared radiation layer and the chamber, and the infrared radiation layer is located on a surface of one side of the base body away from the chamber.

Preferably, the light convergent lens is located at a bottom of the chamber, and the infrared radiation layer is located, at least partially, at a lower end surface of an outer surface of the base body.

Preferably, the light convergent lens includes a convex lens or/and a Fresnel Lens.

Preferably, the base body includes an inner surface close to the chamber and an outer surface disposed opposite to the inner surface, and the light convergent lens is formed between the inner surface and the outer surface.

Preferably, the inner surface or outer surface includes a cambered surface convex toward the inside of the chamber or concave away from the chamber.

Preferably, the outer surface includes a cambered surface convex toward the inside of the chamber or concave away from the chamber, and the first infrared radiation layer is disposed on the cambered surface.

Preferably, the base body is in the shape of a tube and forms one chamber extending along a longitudinal direction, the light convergent lens includes a strip-shaped convex or concave cambered surface which is formed on the inner surface of the base body and is disposed to extend along the longitudinal direction of the chamber.

Preferably, there are a plurality of the strip-shaped cambered surfaces, the plurality of the strip-shaped cambered surfaces are disposed equidistantly along the circumference of the chamber, and the infrared radiation layer is disposed, at least partially, surrounding an outer circumferential surface of the base body.

Preferably, the base body is in the shape of a circular tube, the strip-shaped cambered surface is disposed to be convex and extend along the longitudinal direction of the chamber, and a center of a circle to which the cambered surface belongs is located on the outer circumferential surface of the base body.

Preferably, the strip-shaped cambered surface has an arc height of 0.03 to 0.3mm.

Preferably, the light convergence mechanism and the base body are of an integrated structure, or the light convergence mechanism and the base body are in interference fit connection.

Preferably, the light convergence mechanism includes a first light reflection concave surface located in the chamber.

Preferably, the base body is in the shape of a tube, the first light reflection concave surface is located at a bottom wall of the chamber, and the infrared radiation layer is located at a lateral surface of the base body.

Preferably, the infrared radiation layer is disposed surrounding the outer circumferential surface of the base body.

Preferably, the aerosol generation device further includes a heat insulation tube, the heat insulation tube is sleeved on the base body, the heat insulation tube includes a second light reflection concave surface facing the chamber, and the second light reflection concave surface is configured to converge infrared rays generated by the infrared radiation layer to the aerosol substrate material.

Preferably, the base body is in the shape of a tube, an upper end of the base body is an open end, and a lower end of the base body is a closed end; the infrared radiation layer further includes a first infrared radiation layer and a second infrared radiation layer, the first infrared radiation layer is located at the lower end surface of the outer surface of the base body, and the second infrared radiation layer is located at the lateral surface of the base body.

Preferably, the second infrared radiation layer is disposed surrounding a side wall of the base body, and the second light reflection concave surface is disposed surrounding the outer circumferential surface of the base body.

Preferably, the base body is in the shape of a tube, an upper end of the base body is an open end, and a lower end of the base body is a closed end; the infrared radiation layer is located, at least partially, at a bottom surface of the base body; the aerosol generation device further includes a first electrode and a second electrode, the first electrode is disposed surrounding an outer circumferential edge of the infrared radiation layer and is electrically connected to the infrared radiation layer, and the second electrode elastically abuts against a roughly central area of the infrared radiation layer at the bottom surface of the base body.

Preferably, the aerosol generation device further includes a support element detachably connected to the base body, the support element extends at least partially into the chamber and is spaced from the light convergence mechanism by a preset distance, and the support element defines thereon a placement groove configured to place the aerosol substrate material.

The present disclosure has the following beneficial effects. First, the infrared radiation layer is disposed on the base body to heat the cigarette in an infrared radiation manner, the infrared rays have a good material penetrating power and can heat both inside and outside of the cigarette at the same time, thus enabling a quick speed of aerosol formation; second, since the heating element further includes the light convergence mechanism located on the base body, and the light convergence mechanism is configured to converge the infrared rays to the aerosol substrate material, the energy can be better accumulated to the aerosol substrate material, not only improving the utilization of energy, but also increasing the speed of aerosol formation.

### BRIEF DESCRIPTION OF THE DRAWINGS

One or more embodiments are illustrated through the image(s) in corresponding drawing(s). These illustrations do not form restrictions to the embodiments. Elements in the drawings with a same reference number are expressed as similar elements, and the images in the drawings do not form proportional restrictions unless otherwise stated.
FIG. 1 is a sectional view of an aerosol generation device according to a preferred embodiment of the present disclosure.
FIG. 2 is an enlarged view of Part K in the aerosol generation device shown in FIG. 1.
FIG. 3 is a perspective view of a partial structure of the aerosol generation device shown in FIG. 1.
FIG. 4 is a perspective view of FIG. 3 from another angle of view.
FIG. 5 is a sectional view of a partial structure of another embodiment of an aerosol generation device according to the present disclosure.
FIG. 6 is a sectional view of a partial structure of another embodiment of an aerosol generation device according to the present disclosure.
FIG. 7 is a sectional view of a partial structure of another embodiment of an aerosol generation device according to the present disclosure.
FIG. 8 is a sectional view of a partial structure of another embodiment of an aerosol generation device according to the present disclosure.
FIG. 9 is a sectional view of a partial structure of another embodiment of an aerosol generation device according to the present disclosure.
FIG. 10 is a perspective view of a partial structure of another embodiment of an aerosol generation device according to the present disclosure.
FIG. 11 is a structural diagram of a base body of the aerosol generation device shown in FIG. 10 being matched with a cigarette.
FIG. 12 is a sectional view of a partial structure of another embodiment of an aerosol generation device according to the present disclosure.
FIG. 13 is a sectional view of a partial structure of another embodiment of an aerosol generation device according to the present disclosure.
FIG. 14 is a sectional view of a partial structure of another embodiment of an aerosol generation device according to the present disclosure.
FIG. 15 is a sectional view of a partial structure of another embodiment of an aerosol generation device according to the present disclosure.
FIG. 16 is a sectional view of a partial structure of another embodiment of an aerosol generation device according to the present disclosure.
FIG. 17 is a sectional view of a partial structure of another embodiment of an aerosol generation device according to the present disclosure.

### DETAILED DESCRIPTION

The present disclosure will become better understood from a detailed description of the present disclosure below taken in conjunction with drawings and particular embodiments.

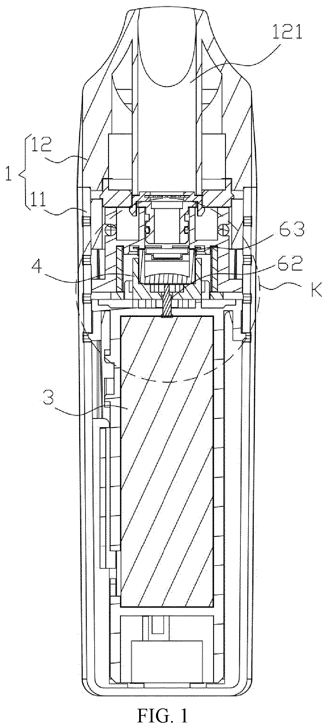

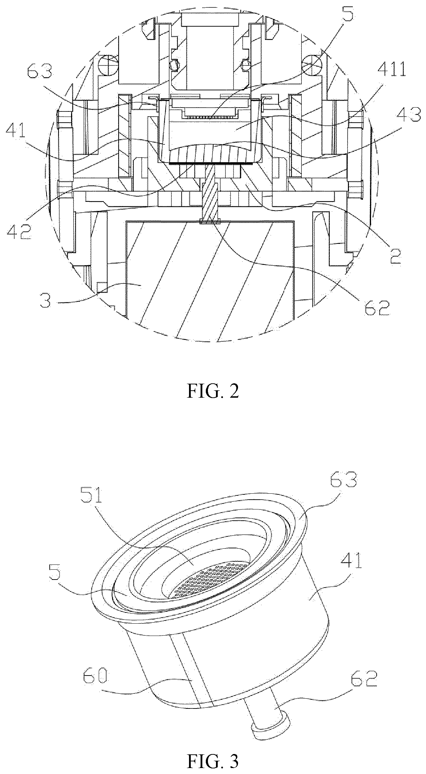

Referring to FIG. 1 to FIG. 4, the present disclosure provides an aerosol generation device, including a housing assembly 1, a holder 2, a battery 3, a heating element 4, a support element 5, a first electrode 61, a second electrode 62 and a third electrode 63; the housing assembly 1 includes a housing sleeve 11 and an end cover 12, the end cover 12 is arranged to cover an end surface of one end of the housing sleeve 11, and the end cover 12 defines a smoke outlet 121, such that a user may inhale the aerosol through the smoke outlet 121 during usage. The holder 2 is housed within the housing sleeve 11 and is connected to the housing sleeve 11, the battery 3 is located within the housing sleeve 11 and is installed on the holder 2.

In one embodiment, the end cover 12 and the holder 2 are both detachably connected to the housing sleeve 11. In certain embodiment, the end cover 12 may be not provided, the holder 2 and the housing sleeve 11 are of an integrated structure. Therefore, no concrete limitation is made to the structures of the housing assembly 1 and the holder 2 here. In addition, during usage, the end cover 12 may also be used as a mouthpiece for inhaling the aerosol. It is understandable that an extra mouthpiece may be used to fit with the end cover 12 to inhale the aerosol, and no concrete limitation is made here.

The heating element 4 is installed on the holder 2, and includes a base body 41, an infrared radiation layer 42, and at least one light convergence mechanism 43; the base body 41 is in the shape of a tube, an upper end of the base body 41 is an open end, and a lower end of the base body 41 is a closed end. A chamber 411 is formed inside the base body 41 and the chamber 411 is configured for accommodating an aerosol substrate material. The aerosol substrate material may be cut tobacco, cigarette cream or a cigarette, etc., as long as it can form an aerosol at a preset temperature after being heated. It is understandable that the aerosol substrate material may be placed directly against the inner wall of the chamber 411, also may be disposed spaced from the inner wall of the chamber 411, and no concrete limitation is made here.

The infrared radiation layer 42 is disposed on a surface of the base body 41, and is configured to generate infrared radiation to heat the aerosol substrate material disposed in the chamber 411. It is understandable that the infrared radiation layer 42 may be electrified itself to generate heat to hereby generate infrared rays, also may be excited to generate infrared rays through the heat conduction of other heating devices, and no concrete limitation is made here. In the present embodiment, the infrared radiation layer 42 is configured to receive an electric power to generate heat to hereby generate infrared rays, and transfer the energy of the infrared rays to the aerosol substrate material at least in a manner of radiation. Specifically, the infrared radiation layer 42 is disposed, at least partially, at a lower end surface of an outer surface of the base body 41, that is, the infrared radiation layer 42 is located, at least partially, at a bottom surface of the base body 41; the infrared radiation layer may be an infrared radiation coating applied on the lower end surface of the outer surface of the base body 41, also may be an infrared radiation film attached to the lower end surface of the outer surface of the base body 41.

The infrared radiation layer 42 when electrified is capable of generating heat, thereby generating infrared rays of certain wavelength, for example, far infrared rays of 8µm to 15µm. When the wavelength of the infrared rays is matched with the wavelength absorbed by the aerosol substrate material, the energy of the infrared rays is easy to be absorbed by the aerosol substrate material. In the embodiments of the present disclosure, no limitation is made to the wavelength of the infrared rays, the infrared rays may be infrared rays of 0.75µm to 1000µm, preferably far infrared rays of 1.5µm to 400µm.

The infrared radiation layer 42 preferably is a mixture of far-infrared electrothermal ink, ceramic powder and inorganic adhesive that is fully stirred and then coated on the surface of the base body 41 and finally is dried and cured for certain time, and the infrared radiation layer 42 has a thickness of 30µm-50µm. Of course, the infrared radiation layer 42 can also be a mixture of tin tetrachloride, tin oxide, antimony trichloride, titanium tetrachloride and anhydrous copper sulfate in certain proportion that is stirred and then coated on the outer surface of the base body 41; or the infrared radiation layer 42 is one of silicon carbide ceramic layer, carbon fiber composite layer, zirconium titanium oxide ceramic layer, zirconium titanium nitride ceramic layer, zirconium titanium boride ceramic layer, zirconium titanium carbide ceramic layer, iron oxide ceramic layer, iron nitride ceramic layer, iron boride ceramic layer, iron carbide ceramic layer, rare earth oxide ceramic layer, rare earth nitride ceramic layer, rare earth boride ceramic layer, rare earth carbide ceramic layer, nickel cobalt oxide ceramic layer, nickel cobalt nitride ceramic layer, nickel cobalt boride ceramic layer, nickel cobalt carbide ceramic layer or high silicon molecular sieve ceramic layer; the infrared radiation layer 42 can also be other existing material coatings.

The light convergence mechanism 43 is bonded onto the base body 41 and is configured to converge the infrared radiation into the chamber 411 to heat at least a portion of the aerosol substrate material. The light convergence mechanism 43 includes a light convergent lens located between the infrared radiation layer 42 and the chamber 411, and the infrared radiation layer 42 is located on a surface of one side of the base body 41 away from the chamber 411. The structure is simple and compact and is convenient to produce.

Specifically, the base body 41 includes an inner surface close to the chamber 411 and an outer surface disposed opposite to the inner surface, and the light convergent lens is formed between the inner surface and the outer surface and is located at the bottom of the chamber 411; an upper surface of a bottom wall of the base body 41 is the inner surface, a lower surface of the bottom wall of the base body 41 is the outer surface, that is to say, the light convergence mechanism 43 and the base body 41 are of an integrated structure, that is, the light convergent lens and the base body 41 are of an integrated structure; therefore, the light convergent lens is directly shaped when the base body 41 is being manufactured, without fixing the light convergent lens through other fixing mechanisms, the production is convenient and the reliability is high, the infrared rays are ensured to be better converged to a preset position. In the present embodiment, the light convergent lens is a convex lens, specifically, a plano-convex lens.

In order to better align the infrared rays to the aerosol substrate material and to conveniently clean the chamber 411, a support element 5 is employed to support the aerosol substrate material to a preset position in the chamber 411. An upper end of the support element 5 is in buckling connection with the base body 41 to achieve a detachable connection, the support element 5 extends at least partially into the chamber 411 and is spaced from the light convergence mechanism 43 by a preset distance, so that more infrared rays may be converged. The support element 5 defines thereon a placement groove 51 configured to place the aerosol substrate material, a depth of the placement groove 51 may be set as needed, and no concrete limitation is made here. In the present embodiment, the support element 5 is a metal mesh. It is understandable that in some embodiment, the support element 5 also may be not provided, or the support element 5 is fixedly connected to the heating element 4.

The first electrode 61 is disposed surrounding an outer circumferential edge of the infrared radiation layer 42 and is electrically connected to the infrared radiation layer 42, specifically, the infrared radiation layer 42 is in the shape of a disc, the first electrode 61 is in the shape of a circular ring, an inner circumferential surface of the first electrode 61 comes into contact with an outer circumferential surface of the infrared radiation layer 42, to achieve electrical connection. The second electrode 62 elastically abuts against a roughly central area of the infrared radiation layer 42 at the bottom surface of the base body 41, that is, the second electrode 62 may abut against the center of the infrared radiation layer 42, also may be slightly deviated from the center of the infrared radiation layer 42. The third electrode 63 is in the shape of a ring and sleeved on the upper end of the base body 41, and is electrically connected to the first electrode 61 through a conductive line 60 disposed on a lateral surface of the base body 41. The second electrode 62 is a pogo pin fixed on the holder 2, and the second electrode 62 is electrically connected to the battery 3 to supply power to the infrared radiation layer 42.

It is understandable that the aerosol generation device further includes a switch (not shown in figures) that is electrically connected to the third electrode 63 and the battery 3 and is configured to control the battery 3 to supply power to the infrared radiation layer 42. When a user needs to inhale aerosol, turn on the switch, then the battery 3 supplies power to the infrared radiation layer 42, so that the infrared radiation layer 42 emits infrared rays to atomize the aerosol substrate material into an aerosol. In one kind of embodiments, the first electrode 61, the second electrode 62 and the third electrode 63 may be not provided, and the infrared radiation layer 42 is electrically connected to the battery 3 through a conductive line.

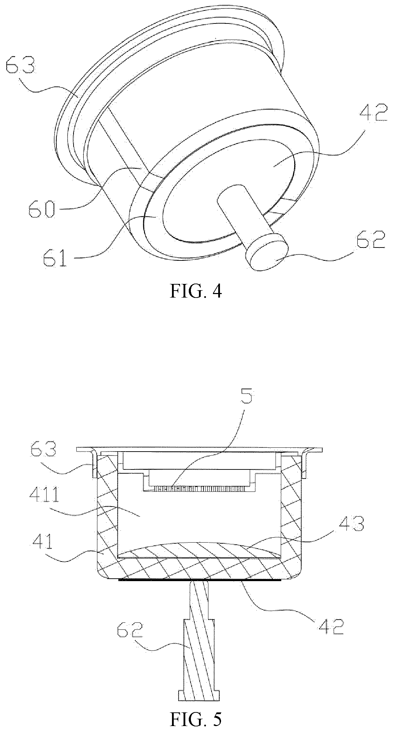

Referring to FIG. 5, provided is a sectional view of a partial structure of another embodiment of an aerosol generation device according to the present disclosure. In this embodiment, the light convergent lens is a convex lens, the convex lens is located in the chamber 411 of the base body 41 and is in interference fit connection with the base body 41, a surface of the convex lens facing the infrared radiation layer 42 is a flat surface and a surface of the convex lens away from the infrared radiation layer 42 is a spherical surface, that is, the convex lens is a plano-convex lens, thereby being capable of tightly fitting with the interior of the base body 41.

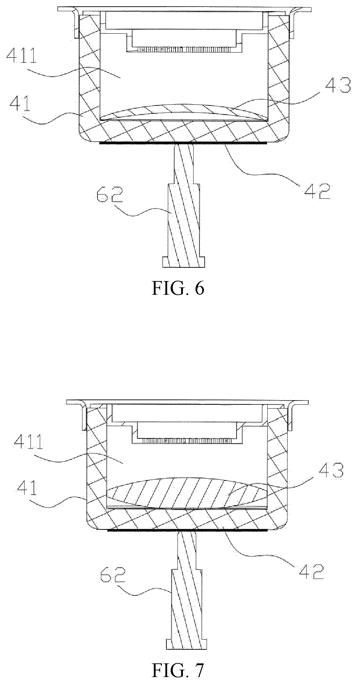

Referring to FIG. 6, provided is a sectional view of a partial structure of another embodiment of an aerosol generation device according to the present disclosure. In this embodiment, the light convergent lens is a convex lens, the convex lens is located in the chamber 411 of the base body 41 and is in interference fit connection with the base body 41, a surface of the convex lens facing the infrared radiation layer 42 is a concave surface and a surface of the convex lens away from the infrared radiation layer 42 is a spherical surface, that is, the convex lens is a meniscus lens.

Referring to FIG. 7, provided is a sectional view of a partial structure of another embodiment of an aerosol generation device according to the present disclosure. In this embodiment, the light convergent lens is a convex lens, the convex lens is located in the chamber 411 of the base body 41 and is in interference fit connection with the base body 41, both of the surfaces of the convex lens facing the infrared radiation layer 42 and away from the infrared radiation layer 42 are a spherical surface, that is, the convex lens is a biconvex lens, thereby being capable of better converging infrared rays.

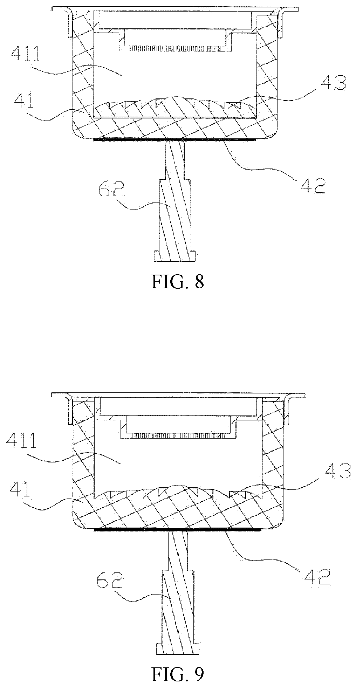

Referring to FIG. 8, provided is a sectional view of a partial structure of another embodiment of an aerosol generation device according to the present disclosure. In this embodiment, the light convergent lens is a Fresnel lens, the Fresnel lens is located in the chamber 411 of the base body 41 and is in interference fit connection with the base body 41, a surface of the Fresnel lens facing the infrared radiation layer 42 is a flat surface and a surface of the Fresnel lens away from the infrared radiation layer 42 includes a plurality of circular grooves that are disposed coaxially.

Referring to FIG. 9, provided is a sectional view of a partial structure of another embodiment of an aerosol generation device according to the present disclosure. In this embodiment, the light convergent lens is a Fresnel lens, the Fresnel lens is located at a bottom wall of the chamber 411 and is integrated with the base body 41, thus the structure is compact. During production, it is not needed to assemble the Fresnel lens separately, the efficiency of production is high.

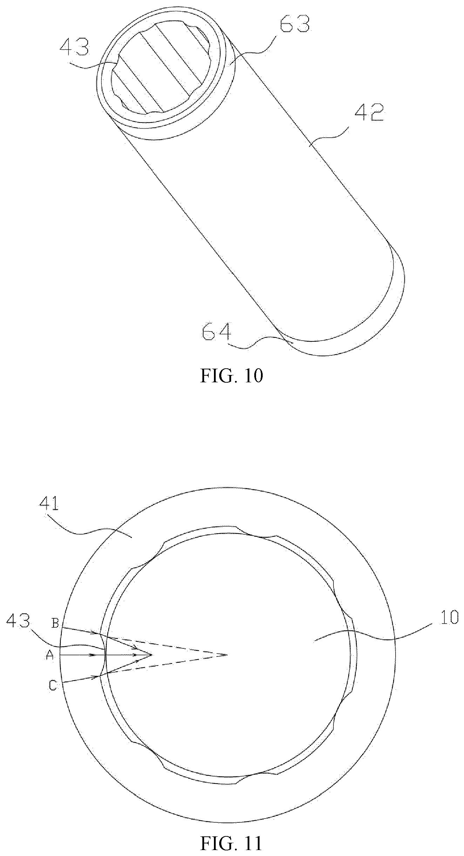

Referring to FIG. 10 and FIG. 11, FIG. 10 is a perspective view of a partial structure of another embodiment of an aerosol generation device according to the present disclosure. In this embodiment, the base body 41 is in the shape of a tube and forms one chamber 411 extending along a longitudinal direction, the light convergent lens includes a strip-shaped convex cambered surface which is formed on the inner surface of the base body 41 and is disposed to extend along the longitudinal direction of the chamber 411, that is, the strip-shaped cambered surface is disposed to be convex and extend along the longitudinal direction of the chamber, that is to say, the light convergent lens is integrated with the base body 41 and is disposed in the chamber 411 in a protruding manner. It is understandable that the number of the strip-shaped cambered surface and the radian may be set as needed. During actual application, since the cigarette 10 generally is strip shaped, when the cigarette 10 is heated the strip-shaped cambered surface is fitting with the cigarette 10, and most areas on the outer surface of the cigarette 10 can acquire converged infrared rays, enabling a quick speed of aerosol formation.

In the present embodiment, the aerosol generation device further includes a fourth electrode 64, the base body 41 is in the shape of a tube with two open ends, there are a plurality of the strip-shaped cambered surfaces, the plurality of the strip-shaped cambered surfaces are disposed equidistantly along the circumference of the chamber 411, both of the third electrode 63 and the fourth electrode 64 are in the shape of a ring and are sleeved on two opposite ends of the base body 41 respectively, the infrared radiation layer 42 is disposed, at least partially, surrounding an outer circumferential surface of the base body 41 and is electrically connected to the third electrode 63 and the fourth electrode 64, so that as many infrared rays may be converged to the cigarette 10 as possible. A center of a circle to which the strip-shaped cambered surface belongs is located on the outer circumferential surface of the base body 41, the strip-shaped cambered surface has an arc height of 0.03 to 0.3mm, thus the strip-shaped cambered surface can abut against the outer circumferential surface of the cigarette 10, so that the cigarette does not shake arbitrarily in the chamber 411. Preferably, the strip-shaped cambered surface has an arc height of 0.05 to 0.1mm.

Since the strip-shaped cambered surfaces are disposed equidistantly along the circumference of the chamber 411, a space is formed between the strip-shaped cambered surfaces, which may serve as a deformation space of the cigarette, not only facilitating the insertion and removal of the cigarette, but also adapting to cigarettes 10 of different diameters to increase compatibility. It is understandable that in one kind of embodiments, the light convergent lens includes a strip-shaped concave cambered surface which is formed on the inner surface of the base body 41 and is disposed to extend along the longitudinal direction of the chamber 411.

From FIG. 11, when infrared rays emitted by Points A, B and C penetrate through an inner wall of the base body 41, due to the function of the light convergent lens, the infrared rays emitted by Points B and C generate refraction at the inner wall of the base body 41. The base body 41 is an optically denser medium, thus the angle of emergence of the infrared rays emitted from the inner wall of the base body 41 is greater than the angle of incidence, the infrared rays are converged.

Compared with case of not arranging the light convergent lens, through the convergence function of the light convergent lens on the inner wall of the base body 41, the infrared rays in the same area between the Points B and C on the base body 41 has the scope of irradiation onto the outer wall of the cigarette 10 changed from 20 degrees to 16 degrees, namely, the same infrared rays are converged to a smaller scope. That is to say, the same energy is concentrated in a smaller scope, then this local temperature will change more quickly, achieving the function of rapid rise of temperature; as the temperature rises rapidly, the aerosol substrate material corresponding to this part has a quicker speed of aerosol formation, which increases the speed of aerosol formation on the whole.

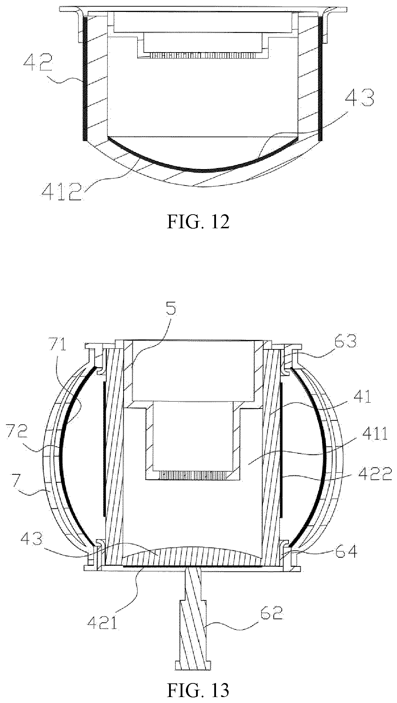

Referring to FIG. 12, provided is a sectional view of a partial structure of another embodiment of an aerosol generation device according to the present disclosure. In this embodiment, the light convergence mechanism 43 is a first light reflection concave surface located in the chamber 411. Specifically, the base body 41 of this embodiment is in the shape of a tube, the infrared radiation layer 42 is located at the lateral surface of the base body 41 and is disposed surrounding the outer circumferential surface of the base body 41. The first light reflection concave surface is located at the bottom wall of the chamber 411 and is configured to converge the light emitted by the infrared radiation layer 42 to the aerosol substrate material. In the present embodiment, an inner surface of the bottom wall of the chamber 411 is plated with a first light reflection layer 412, the first light reflection layer 412 may be made of materials such as silver, aluminum or alloy, etc., and no concrete limitation is made here. It is understandable that the bottom wall of the chamber 411 may also be made of a light reflecting material. Preferably, the first light reflection concave surface is a spherical surface.

Referring to FIG.13, provided is a sectional view of a partial structure of another embodiment of an aerosol generation device according to the present disclosure. In this embodiment, the aerosol generation device further includes a heat insulation tube 7, the heat insulation tube 7 is sleeved on the base body 41, the heat insulation tube 7 includes a second light reflection concave surface 71 facing the chamber 411, the second light reflection concave surface 71 is disposed surrounding the outer circumferential surface of the base body 41, and the second light reflection concave surface 71 is configured to converge infrared rays generated by the infrared radiation layer 42 to the aerosol substrate material. In the present embodiment, an inner surface of the heat insulation tube 7 is plated with a second light reflection layer 72, which may be made of materials such as silver, aluminum or alloy, etc., and no concrete limitation is made here. It is understandable that the heat insulation tube 7 may also be made of a light reflection material. Preferably, the second light reflection concave surface 71 is a spherical surface.

In this embodiment, the base body 41 is in the shape of a tube, an upper end of the base body 41 is an open end, and a lower end of the base body 41 is a closed end. Two ends of the base body 41 are sleeved with a third electrode 63 and a fourth electrode 64, a second electrode 62 is disposed below the base body 41; the second electrode 62, the third electrode 63 and the fourth electrode 64 are electrically connected to the battery 3 through a conductive line. Both of the third electrode 63 and the fourth electrode 64 are located between the base body 41 and the heat insulation tube 7. The infrared radiation layer 42 includes a first infrared radiation layer 421 and a second infrared radiation layer 422, wherein the first infrared radiation layer 421 is located at the lower end surface of the outer surface of the base body 41 and is electrically connected to the second electrode 62 and the fourth electrode 64. The second infrared radiation layer 422 is located at the lateral surface of the base body 41 and is electrically connected to the third electrode 63 and the fourth electrode 64, and the second infrared radiation layer 422 is disposed surrounding the side wall of the base body 41. The light convergent lens is integrated with the base body 41 and is located at the bottom of the chamber 411.

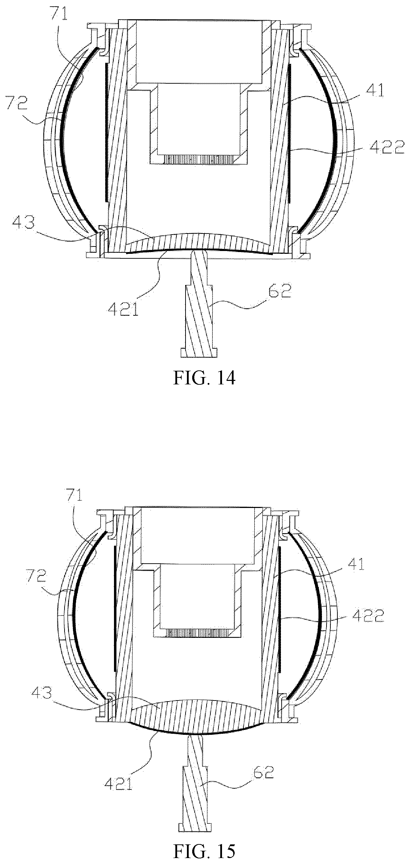

Referring to FIG. 14, provided is a sectional view of a partial structure of another embodiment of an aerosol generation device according to the present disclosure. This embodiment has the similar structure to the above one embodiment. The base body 41 includes an inner surface close to the chamber 411 and an outer surface disposed opposite to the inner surface, and the light convergent lens is formed between the inner surface and the outer surface, wherein the outer surface includes the lower end surface of the base body 41, the difference lies in that: the lower end surface of the base body 41 of this embodiment is a cambered surface convex toward the inside of the chamber 411, and the first infrared radiation layer 421 is disposed on the cambered surface. Specifically, the bottom wall of the base body 41 is a meniscus lens.

Referring to FIG. 15, provided is a sectional view of a partial structure of another embodiment of an aerosol generation device according to the present disclosure. This embodiment has the similar structure to the above one embodiment, the difference lies in that: the lower end surface of the base body 41 of this embodiment is a cambered surface concave away from the inside of the chamber 411, and the first infrared radiation layer 421 is disposed on the cambered surface. Specifically, the bottom wall of the base body 41 is a biconvex lens.

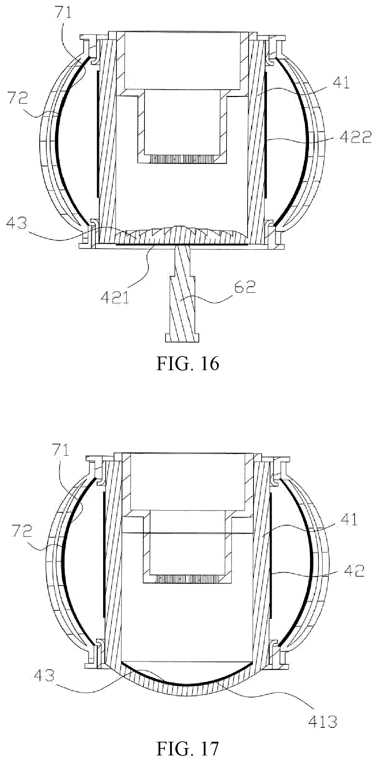

Referring to FIG. 16, provided is a sectional view of a partial structure of another embodiment of an aerosol generation device according to the present disclosure. This embodiment has the similar structure to the above one embodiment, the difference lies in that: the lower end surface of the base body 41 of this embodiment is a flat surface, and the bottom wall of the base body 41 is a Fresnel lens.

Referring to FIG. 17, provided is a sectional view of a partial structure of another embodiment of an aerosol generation device according to the present disclosure. This embodiment has the similar structure to the above one embodiment, the difference lies in that: the light convergence mechanism 43 of this embodiment includes a first light reflection concave surface located in the chamber 411. Specifically, the base body 41 of this embodiment is in the shape of a tube, the first light reflection concave surface is located at the bottom wall of the chamber 411, the infrared radiation layer 42 is located at the lateral surface of the base body 41 and is disposed surrounding the outer circumferential surface of the base body. In this embodiment, an inner surface of the bottom wall of the chamber 411 is plated with a third light reflection layer 413, which may be made of materials such as silver, aluminum or alloy, etc., and no concrete limitation is made here. It is understandable that the bottom wall of the chamber 411 may also be made of a light reflecting material.

To sum up, first, the infrared radiation layer 42 is disposed on the base body 41 to heat the cigarette in an infrared radiation manner, the infrared rays have a good material penetrating power and can heat both inside and outside of the cigarette at the same time, thus enabling a quick speed of aerosol formation; second, since the heating element 4 further includes the light convergence mechanism 43 located on the base body 41, and the light convergence mechanism 43 is configured to converge the infrared rays to the aerosol substrate material, the energy can be better accumulated to the aerosol substrate material, not only improving the utilization of energy, but also increasing the speed of aerosol formation.

It is to be noted that the description of the present disclosure and the drawings just list preferred embodiments of the present disclosure and are not limited to the embodiments described herein. Further, for the ordinary staff in this field, improvements or variations may be made according to the above description.

## Claims

1. An aerosol generation device, comprising a heating element (4), wherein the heating element (4) comprises a base body (41), an infrared radiation layer (42), and **characterized in that** the aerosol generation device further comprises at least one light convergence mechanism (43); wherein the base body (41) has a chamber (411) for accommodating an aerosol substrate material; the infrared radiation layer (42) is disposed on a surface of the base body (41), and is configured to generate infrared radiation to heat the aerosol substrate material disposed in the chamber (411); and wherein the at least one light convergence mechanism (43) is bonded onto the base body (41) and is configured to converge the infrared radiation into the chamber (411) to heat at least a portion of the aerosol substrate material.

2. The aerosol generation device according to claim 1, wherein the light convergence mechanism (43) comprises a light convergent lens located between the infrared radiation layer (42) and the chamber (411), and the infrared radiation layer (42) is located on a surface of one side of the base body (41) away from the chamber (411).

3. The aerosol generation device according to claim 2, wherein the light convergent lens is located at a bottom of the chamber (411), and the infrared radiation layer (42) is located, at least partially, at a lower end surface of an outer surface of the base body (41).

4. The aerosol generation device according to claim 2 or 3, wherein the light convergent lens comprises a convex lens or/and a Fresnel Lens.

5. The aerosol generation device according to claim 2 or 3, wherein the base body (41) comprises an inner surface close to the chamber (411) and an outer surface disposed opposite to the inner surface, and the light convergent lens is formed between the inner surface and the outer surface.

6. The aerosol generation device according to claim 5, wherein the inner surface or outer surface comprises a cambered surface convex toward the inside of the chamber (411) or concave away from the chamber (411).

7. The aerosol generation device according to claim 6, wherein
the infrared radiation layer (42) comprises a first infrared radiation layer (421), and the first infrared radiation layer (421) is located at the lower end surface of the outer surface of the base body (41);
the outer surface comprises a cambered surface convex toward the inside of the chamber (411) or concave away from the chamber (411), and the first infrared radiation layer (421) is disposed on the cambered surface.

8. The aerosol generation device according to claim 5, wherein the base body (41) is in the shape of a tube and forms one chamber (411) extending along a longitudinal direction, the light convergent lens comprises a strip-shaped convex or concave cambered surface which is formed on the inner surface of the base body (41) and is disposed to extend along the longitudinal direction of the chamber (411).

9. The aerosol generation device according to claim 8, wherein there are a plurality of the strip-shaped cambered surfaces, the plurality of the strip-shaped cambered surfaces are disposed equidistantly along the circumference of the chamber (411), and the infrared radiation layer (42) is disposed, at least partially, surrounding an outer circumferential surface of the base body (41).

10. The aerosol generation device according to claim 9, wherein the base body (41) is in the shape of a circular tube, the strip-shaped cambered surface is disposed to be convex and extend along the longitudinal direction of the chamber (411), and a center of a circle to which the cambered surface belongs is located on the outer circumferential surface of the base body (41).

11. The aerosol generation device according to claim 9, wherein the strip-shaped cambered surface has an arc height of 0.03 to 0.3mm.

12. The aerosol generation device according to any one of claims 1 to 3, wherein the light convergence mechanism (43) and the base body (41) are of an integrated structure, or the light convergence mechanism (43) and the base body (41) are in interference fit connection.

13. The aerosol generation device according to any one of claims 1 to 3, wherein the light convergence mechanism (43) comprises a first light reflection concave surface (412) located in the chamber (411).

14. The aerosol generation device according to claim 13, wherein the base body (41) is in the shape of a tube, the first light reflection concave surface (412) is located at a bottom wall of the chamber (411), and the infrared radiation layer (42) is located at a lateral surface of the base body (41).

15. The aerosol generation device according to claim 14, wherein the infrared radiation layer (42) is disposed surrounding the outer circumferential surface of the base body (41).

16. The aerosol generation device according to any one of claims 1 to 3,
wherein the aerosol generation device further comprises a heat insulation tube (7), the heat insulation tube (7) is sleeved on the base body (41), the heat insulation tube (7) comprises a second light reflection concave surface (71) facing the chamber (411), and the second light reflection concave surface (71) is configured to converge infrared rays generated by the infrared radiation layer (42) to the aerosol substrate material; or
wherein the base body (41) is in the shape of a tube, an upper end of the base body (41) is an open end, and a lower end of the base body (41) is a closed end; the infrared radiation layer (42) is located, at least partially, at a bottom surface of the base body (41); the aerosol generation device further comprises a first electrode (61) and a second electrode (62), the first electrode (61) is disposed surrounding an outer circumferential edge of the infrared radiation layer (42) and is electrically connected to the infrared radiation layer (42), and the second electrode (62) elastically abuts against a roughly central area of the infrared radiation layer (42) at the bottom surface of the base body (41); or
wherein the aerosol generation device further comprises a support element detachably connected to the base body (41), the support element (5) extends at least partially into the chamber (411) and is spaced from the light convergence mechanism (43) by a preset distance, and the support element (5) defines thereon a placement groove (51) configured to place the aerosol substrate material.

## Patentansprüche

1. Aerosolerzeugungsvorrichtung, die ein Heizelement (4) umfasst, wobei das Heizelement (4) einen Grundkörper (41) und eine Infrarotstrahlungsschicht (42) umfasst, und **dadurch gekennzeichnet, dass** die Aerosolerzeugungsvorrichtung ferner mindestens einen Lichtkonvergenzmechanismus (43) umfasst; wobei der Grundkörper (41) eine Kammer (411) zur Aufnahme eines Aerosolsubstratmaterials aufweist; die Infrarot-Strahlungsschicht (42) auf einer Oberfläche des Grundkörpers (41) angeordnet ist und so konfiguriert ist, dass sie Infrarot-Strahlung erzeugt, um das in der Kammer (411) angeordnete AerosolSubstratmaterial zu erwärmen; und wobei der mindestens eine Lichtkonvergenzmechanismus (43) mit dem Grundkörper (41) verbunden ist und so konfiguriert ist, dass er die Infrarot-Strahlung in die Kammer (411) konvergiert, um mindestens einen Teil des AerosolSubstratmaterials zu erwärmen.

2. Aerosolerzeugungsvorrichtung nach Anspruch 1, wobei der Lichtkonvergenzmechanismus (43) eine Lichtkonvergenzlinse umfasst, die zwischen der Infrarotstrahlungsschicht (42) und der Kammer (411) angeordnet ist, und die Infrarotstrahlungsschicht (42) auf einer Oberfläche einer Seite des Grundkörpers (41) entfernt von der Kammer (411) angeordnet ist.

3. Aerosolerzeugungsvorrichtung nach Anspruch 2, wobei die Lichtkonvergenzlinse an einem Boden der Kammer (411) angeordnet ist und die Infrarotstrahlungsschicht (42) zumindest teilweise an einer unteren Endfläche einer Außenfläche des Grundkörpers (41) angeordnet ist.

4. Die Aerosolerzeugungsvorrichtung nach Anspruch 2 oder 3, wobei die Lichtkonvergenzlinse eine konvexe Linse oder/und eine Fresnel-Linse umfasst.

5. Aerosolerzeugungsvorrichtung nach Anspruch 2 oder 3, wobei der Grundkörper (41) eine Innenfläche nahe der Kammer (411) und eine der Innenfläche gegenüberliegende Außenfläche aufweist, und die Lichtkonvergenzlinse zwischen der Innenfläche und der Außenfläche ausgebildet ist.

6. Aerosolerzeugungsvorrichtung nach Anspruch 5, wobei die Innenfläche oder die Außenfläche eine gewölbte Oberfläche aufweist, die zum Inneren der Kammer (411) hin konvex oder von der Kammer (411) weg konkav ist.

7. Die Aerosolerzeugungsvorrichtung nach Anspruch 6, wobei
die Infrarot-Strahlungsschicht (42) eine erste Infrarot-Strahlungsschicht (421) umfasst, und die erste Infrarot-Strahlungsschicht (421) sich an der unteren Endfläche der Außenfläche des Grundkörpers (41) befindet;
die Außenfläche eine gewölbte Oberfläche aufweist, die zum Inneren der Kammer (411) hin konvex oder von der Kammer (411) weg konkav ist, und die erste Infrarotstrahlungsschicht (421) auf der gewölbten Oberfläche angeordnet ist.

8. Aerosolerzeugungsvorrichtung nach Anspruch 5, wobei der Grundkörper (41) die Form eines Rohrs hat und eine Kammer (411) bildet, die sich entlang einer Längsrichtung erstreckt, die Lichtkonvergenzlinse eine streifenförmige konvexe oder konkave gewölbte Oberfläche umfasst, die auf der Innenfläche des Grundkörpers (41) ausgebildet ist und so angeordnet ist, dass sie sich entlang der Längsrichtung der Kammer (411) erstreckt.

9. Aerosolerzeugungsvorrichtung nach Anspruch 8, wobei eine Vielzahl der streifenförmigen gewölbten Flächen vorhanden ist, die Vielzahl der streifenförmigen gewölbten Flächen äquidistant entlang des Umfangs der Kammer (411) angeordnet ist und die Infrarotstrahlungsschicht (42) zumindest teilweise eine äußere Umfangsfläche des Grundkörpers (41) umgibt.

10. Aerosolerzeugungsvorrichtung nach Anspruch 9, wobei der Grundkörper (41) die Form einer kreisförmigen Röhre hat, die streifenförmige gewölbte Oberfläche so angeordnet ist, dass sie konvex ist und sich entlang der Längsrichtung der Kammer (411) erstreckt, und ein Mittelpunkt eines Kreises, zu dem die gewölbte Oberfläche gehört, auf der äußeren Umfangsfläche des Grundkörpers (41) liegt.

11. Aerosolerzeugungsvorrichtung nach Anspruch 9, wobei die streifenförmige gewölbte Oberfläche eine Bogenhöhe von 0,03 bis 0,3 mm aufweist.

12. Aerosolerzeugungsvorrichtung nach einem der Ansprüche 1 bis 3, wobei der Lichtkonvergenzmechanismus (43) und der Grundkörper (41) eine integrierte Struktur aufweisen oder der Lichtkonvergenzmechanismus (43) und der Grundkörper (41) in Presspassung miteinander verbunden sind.

13. Aerosolerzeugungsvorrichtung nach einem der Ansprüche 1 bis 3, wobei der Lichtkonvergenzmechanismus (43) eine erste lichtreflektierende konkave Fläche (412) umfasst, die sich in der Kammer (411) befindet.

14. Aerosolerzeugungsvorrichtung nach Anspruch 13, wobei der Grundkörper (41) die Form einer Röhre hat, die erste konkave Lichtreflexionsfläche (412) an einer Bodenwand der Kammer (411) angeordnet ist und die Infrarotstrahlungsschicht (42) an einer Seitenfläche des Grundkörpers (41) angeordnet ist.

15. Aerosolerzeugungsvorrichtung nach Anspruch 14, wobei die Infrarotstrahlungsschicht (42) um die äußere Umfangsfläche des Grundkörpers (41) angeordnet ist.

16. Die Aerosolerzeugungsvorrichtung nach einem der Ansprüche 1 bis 3,
wobei die Aerosolerzeugungsvorrichtung ferner ein Wärmeisolationsrohr (7) umfasst, das Wärmeisolationsrohr (7) auf den Grundkörper (41) aufgeschoben ist, das Wärmeisolationsrohr (7) eine zweite lichtreflektierende konkave Oberfläche (71) umfasst, die der Kammer (411) zugewandt ist, und die zweite lichtreflektierende konkave Oberfläche (71) so konfiguriert ist, dass sie von der Infrarotstrahlungsschicht (42) erzeugte Infrarotstrahlen auf das Aerosolsubstratmaterial konvergiert; oder
wobei der Basiskörper (41) die Form einer Röhre hat, ein oberes Ende des Basiskörpers (41) ein offenes Ende ist und ein unteres Ende des Basiskörpers (41) ein geschlossenes Ende ist; die Infrarotstrahlungsschicht (42) zumindest teilweise an einer Bodenfläche des Basiskörpers (41) angeordnet ist; die Aerosolerzeugungsvorrichtung ferner eine erste Elektrode (61) und eine zweite Elektrode (62) umfasst, wobei die erste Elektrode (61) um eine äußere Umfangskante der Infrarot-Strahlungsschicht (42) herum angeordnet und elektrisch mit der Infrarot-Strahlungsschicht (42) verbunden ist, und die zweite Elektrode (62) elastisch an einem etwa zentralen Bereich der Infrarot-Strahlungsschicht (42) an der Bodenfläche des Grundkörpers (41) anliegt; oder
wobei die Aerosolerzeugungsvorrichtung ferner ein Stützelement umfasst, das abnehmbar mit dem Grundkörper (41) verbunden ist, wobei sich das Stützelement (5) zumindest teilweise in die Kammer (411) hinein erstreckt und von dem Lichtkonvergenzmechanismus (43) um einen voreingestellten Abstand beabstandet ist, und wobei das Stützelement (5) darauf eine Platzierungsrille (51) definiert, die konfiguriert ist, um das Aerosolsubstratmaterial zu platzieren.

## Revendications

1. Dispositif de génération d'aérosol , comprenant un élément chauffant (4), dans lequel l'élément chauffant (4) comprend un corps de base (41), une couche de rayonnement infrarouge (42), et **caractérisé en ce que** le dispositif de génération d'aérosol comprend en outre au moins un mécanisme de convergence de lumière (43) ; dans lequel le corps de base (41) a une chambre (411) pour loger un matériau de substrat d'aérosol ; la couche de rayonnement infrarouge (42) est disposée sur une surface du corps de base (41) et est configurée pour générer un rayonnement infrarouge afin de chauffer le matériau de substrat de l'aérosol disposé dans la chambre (411) ; et dans lequel au moins un mécanisme de convergence de la lumière (43) est collé sur le corps de base (41) et est configuré pour faire converger le rayonnement infrarouge dans la chambre (411) afin de chauffer au moins une partie du matériau de substrat de l'aérosol.

2. Le dispositif de génération d'aérosol selon la revendication 1, dans lequel le mécanisme de convergence de la lumière (43) comprend une lentille de convergence de la lumière située entre la couche de rayonnement infrarouge (42) et la chambre (411), et la couche de rayonnement infrarouge (42) est située sur une surface d'un côté du corps de base (41) à l'écart de la chambre (411).

3. Dispositif de génération d'aérosol selon la revendication 2, dans lequel la lentille convergente de lumière est située au fond de la chambre (411), et la couche de rayonnement infrarouge (42) est située, au moins partiellement, à l'extrémité inférieure d'une surface extérieure du corps de base (41).

4. Dispositif de génération d'aérosol selon la revendication 2 ou 3, dans lequel la lentille convergente de lumière comprend une lentille convexe ou/et une lentille de Fresnel.

5. Le dispositif de génération d'aérosol selon la revendication 2 ou 3, dans lequel le corps de base (41) comprend une surface intérieure proche de la chambre (411) et une surface extérieure disposée à l'opposé de la surface intérieure, et la lentille convergente de lumière est formée entre la surface intérieure et la surface extérieure.

6. Le dispositif de génération d'aérosol selon la revendication 5, dans lequel la surface intérieure ou la surface extérieure comprend une surface bombée convexe vers l'intérieur de la chambre (411) ou concave à l'opposé de la chambre (411).

7. Dispositif de génération d'aérosol selon la revendication 6, dans lequel
la couche de rayonnement infrarouge (42) comprend une première couche de rayonnement infrarouge (421), et la première couche de rayonnement infrarouge (421) est située à l'extrémité inférieure de la surface extérieure du corps de base (41) ;
la surface extérieure comprend une surface bombée convexe vers l'intérieur de la chambre (411) ou concave à l'opposé de la chambre (411), et la première couche de rayonnement infrarouge (421) est disposée sur la surface bombée.

8. Le dispositif de génération d'aérosol selon la revendication 5, dans lequel le corps de base (41) a la forme d'un tube et forme une chambre (411) s'étendant le long d'une direction longitudinale, la lentille convergente de lumière comprend une surface bombée convexe ou concave en forme de bande qui est formée sur la surface intérieure du corps de base (41) et est disposée pour s'étendre le long de la direction longitudinale de la chambre (411).

9. Le dispositif de génération d'aérosol selon la revendication 8, dans lequel il y a une pluralité de surfaces cambrées en forme de bande, la pluralité de surfaces cambrées en forme de bande sont disposées de manière équidistante le long de la circonférence de la chambre (411), et la couche de rayonnement infrarouge (42) est disposée, au moins partiellement, autour d'une surface circonférentielle externe du corps de base (41).

10. Le dispositif de génération d'aérosol selon la revendication 9, dans lequel le corps de base (41) a la forme d'un tube circulaire, la surface bombée en forme de bande est disposée de manière à être convexe et à s'étendre le long de la direction longitudinale de la chambre (411), et un centre d'un cercle auquel la surface bombée appartient est situé sur la surface circonférentielle extérieure du corps de base (41).

11. Dispositif de génération d'aérosol selon la revendication 9, dans lequel la surface bombée en forme de bande a une hauteur d'arc de 0,03 à 0,3 mm.

12. Dispositif de génération d'aérosol selon l'une des revendications 1 à 3, dans lequel le mécanisme de convergence de la lumière (43) et le corps de base (41) sont d'une structure intégrée, ou le mécanisme de convergence de la lumière (43) et le corps de base (41) sont assemblés par ajustement serré.

13. Dispositif de génération d'aérosol selon l'une des revendications 1 à 3, dans lequel le mécanisme de convergence de la lumière (43) comprend une première surface concave de réflexion de la lumière (412) située dans la chambre (411).

14. Le dispositif de génération d'aérosol selon la revendication 13, dans lequel le corps de base (41) a la forme d'un tube, la première surface concave de réflexion de la lumière (412) est située sur une paroi inférieure de la chambre (411), et la couche de rayonnement infrarouge (42) est située sur une surface latérale du corps de base (41).

15. Le dispositif de génération d'aérosol selon la revendication 14, dans lequel la couche de rayonnement infrarouge (42) est disposée autour de la surface circonférentielle extérieure du corps de base (41).

16. Dispositif de génération d'aérosol selon l'une des revendications 1 à 3,
dans lequel le dispositif de génération d'aérosol comprend en outre un tube d'isolation thermique (7), le tube d'isolation thermique (7) est manchonné sur le corps de base (41), le tube d'isolation thermique (7) comprend une seconde surface concave de réflexion de la lumière (71) faisant face à la chambre (411), et la seconde surface concave de réflexion de la lumière (71) est configurée pour faire converger les rayons infrarouges générés par la couche de rayonnement infrarouge (42) vers le matériau de substrat de l'aérosol ; ou
dans lequel le corps de base (41) a la forme d'un tube, une extrémité supérieure du corps de base (41) est une extrémité ouverte, et une extrémité inférieure du corps de base (41) est une extrémité fermée ; la couche de rayonnement infrarouge (42) est située, au moins partiellement, sur une surface inférieure du corps de base (41) ; le dispositif de génération d'aérosol comprend en outre une première électrode (61) et une deuxième électrode (62), la première électrode (61) est disposée autour d'un bord circonférentiel extérieur de la couche de rayonnement infrarouge (42) et est connectée électriquement à la couche de rayonnement infrarouge (42), et la deuxième électrode (62) s'appuie élastiquement contre une zone à peu près centrale de la couche de rayonnement infrarouge (42) à la surface inférieure du corps de base (41) ; ou
le dispositif de génération d'aérosols comprend en outre un élément de support relié de manière amovible au corps de base (41), l'élément de support (5) s'étend au moins partiellement dans la chambre (411) et est espacé du mécanisme de convergence de la lumière (43) d'une distance prédéfinie, et l'élément de support (5) définit sur celui-ci une rainure de placement (51) configurée pour placer le matériau du substrat de l'aérosol.
